# EUROPEAN PATENT APPLICATION

(11) **EP 2 005 829 A1**
(43) Date of publication of application: **24.12.2008**
(21) Application number: 08158315.5
(22) Date of filing: 16.06.2008
(51) Int. Cl.: A21C 11/22, A21C 9/08, A21C 11/10

(54) **Apparatus for making pasta, particularly of the tagliolini type**

(30) Priority: 22.06.2007 IT PD20070213
(71) Applicant: Secom Ita s.r.l, 35013 Cittadella PD (IT)
(72) Inventor: Pavan, Piergiorgio, 35015 Galliera Veneta PD (IT)
(74) Representative: Modiano, Micaela Nadia

(57) **Abstract**

An apparatus for making pasta, which comprises:
- means (10a) for laminating the pasta into a sheet (11) and for calibrating its thickness,
- means (12) for cutting the sheet (11) longitudinally into strips (13) of preset width,
- means (14) for cutting the strips (13) transversely into bodies (15) of preset length,
- means (19) for transferring the strips (13) from the longitudinal cutting means (12) toward the transverse cutting means (14) and from the transverse cutting means (14) toward subsequent transport and deposition means (16),
- means (16) for transporting and depositing the bodies (15) of preset length and width, arranged in tidy strips (17,17a,17b) of one or more layers, onto a drying frame (18).

## Description

The present invention relates to an apparatus for making pasta, particularly of the tagliolini type.

Pasta of the tagliolini type is currently known, widespread and appreciated worldwide.

In a particular embodiment, such pasta has the appearance of a matchstick and is generally produced by means of an apparatus which comprises
- a lamination machine, which is adapted to produce a thin sheet of pasta of the desired and predefined thickness,
- a machine, generally with mutually opposite rollers, for the longitudinal cutting of such sheet of pasta into longitudinal strips of preset width,
- means for the transverse cutting of such strips of pasta to a preset length,
- means, generally a conveyor belt, for depositing such strips of pasta onto a pre-drying frame.

The pasta strips are then gathered manually, stacked and placed on a second conveyor belt, which causes the advancement of the stacked strips toward transverse cutting means, for example a rising/falling blade which acts in a guillotine-like fashion, such means being designed to cut the strips into matchstick bodies, which fall onto a deposition surface.

From this deposition surface, the matchstick bodies are gathered manually with a scoop (a sort of long shovel) and are arranged tidily on a drying frame.

Once drying has ended, the resulting tagliolini are gathered, again manually by means of a scoop, and poured into a bag or other container for packaging; finally, such bag, with the tagliolini inside it, is weighed and closed, for example by means of a manual heat-sealing unit.

Although the described method is based on the use of dedicated machines which are functionally interconnected in an apparatus of proven effectiveness, efficiency and practicality, it has an important use of labor: it is estimated, for example, that with an apparatus of a known type, a production of 400-450 kg per hour of finished product requires three or four operators for the step for gathering and placing on a drying frame the newly cut fresh tagliolini, and more than ten people for the step for collecting the finished product, i.e., the appropriately dried tagliolini, for subsequent weighing and final packaging.

Known apparatuses, therefore, despite being efficient, have an extensive use of labor, often with low specialization, with all the consequent risks for the quality of the work performed.

This entails high labor costs and a constant risk of human error, especially in the important steps for weighing and closing the package.

The aim of the present invention is to provide an apparatus for making pasta, particularly of the tagliolini type, which is capable of obviating the above-mentioned drawbacks of known types of apparatus.

Within this aim, an object of the present invention is to provide an apparatus which allows to reduce labor costs and at the same time increase the speed of the production process without losing quality.

Another object of the present invention is to provide an apparatus for making pasta which can be managed easily even by an operator who does not have particular prior teachings.

Another object of the present invention is to provide an apparatus which can be obtained also with known types of machine.

Another object of the present invention is to provide an apparatus for making pasta, particularly of the tagliolini type, which can be manufactured with known technologies.

This aim and these and other objects, which will become better apparent hereinafter, are achieved by an apparatus for making pasta, particularly of the tagliolini type, which is characterized in that it comprises:
- means for laminating the pasta into a sheet and for calibrating its thickness,
- means for cutting the sheet longitudinally into strips of preset width,
- means for cutting said strips transversely into bodies of preset length,
- means for transferring said strips from said longitudinal cutting means toward said transverse cutting means and from said transverse cutting means toward subsequent transport and deposition means,
- means for the transport and deposition of said bodies of preset length and width, arranged in tidy strips into one or more layers, onto a drying frame.

Further characteristics and advantages of the invention will become better apparent from the following detailed description of a preferred but not exclusive embodiment thereof, illustrated by way of non-limiting example in the accompanying drawings, wherein:
Figure 1 is a schematic perspective view of an apparatus according to the invention;
Figures 2a, 2b, 2c are each schematic views of a step of the operation of the transport and deposition means.

With reference to the figures, an apparatus for making pasta, particularly of the tagliolini type, according to the invention, is generally designated by the reference numeral 10.

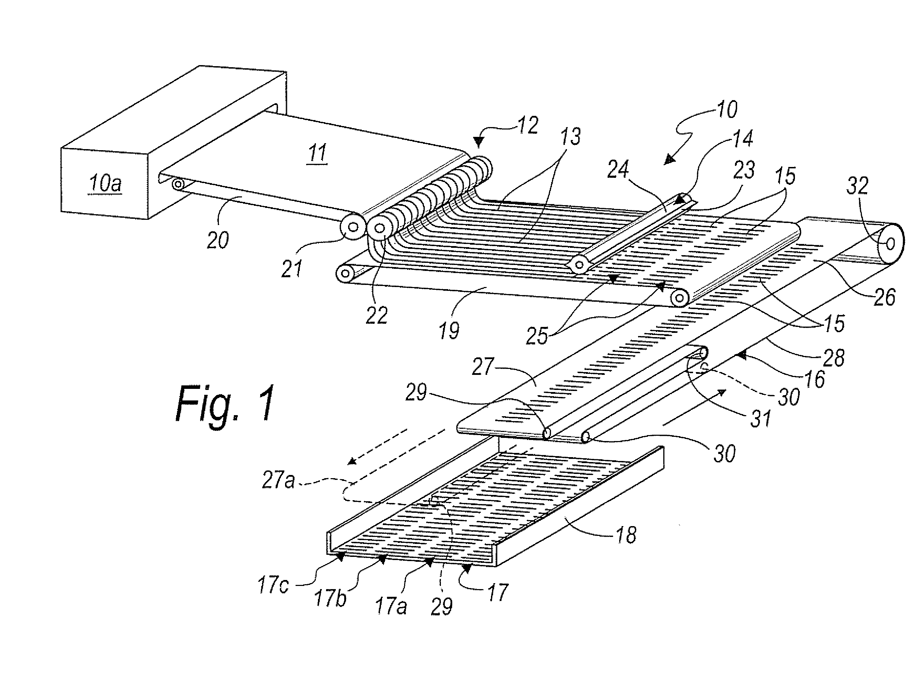

Such apparatus comprises:
- means 10a for laminating the pasta into a sheet and calibrating its thickness; the pasta in sheet form is designated by the reference numeral 11 in Figure 1;
- means 12 for cutting the sheet 11 longitudinally into strips 13 of preset width;
- means 14 for cutting the strips 13 transversely into bodies 15 of preset length,
- means 19 for transferring the strips 13 from the longitudinal cutting means 12 toward the transverse cutting means 14, and from the transverse cutting means 14 toward successive transport and deposition means 16,
- means 16 for transporting and depositing the bodies 15 of preset length and width, arranged in tidy strips 17 on one or more layers, onto a drying frame 18.

The lamination means 10a are constituted by a known type of lamination and gauging machine, such as for example a forming machine for sheets of pasta and associated thickness gauging rollers.

The pasta in sheet form 11 is produced continuously by said forming machine.

The sheet 11 rests on a conveyor belt 20.

Such conveyor belt carries the sheet 11 to the longitudinal cutting means 12.

In the embodiment of the invention described here by way of non-limiting example of the invention, the longitudinal cutting means 12 are constituted by two mutually opposite rollers 21 and 22, with mutually opposite grooves which mutually interpenetrate.

The sheet 11 exits from the longitudinal cutting rollers 21 and 22 in the form of a series of continuous adjacent strips 13 which rest on the transfer means 19.

The transfer means 19 are constituted by a second conveyor belt, which is arranged so as to make the strips 13 pass below the transverse cutting means 14.

In the embodiment of the invention described here, which is a non-limiting example of such invention, the transverse cutting means 14 are constituted by a rotating cutter whose blades 23, arranged in the direction of the axis of a roller 24 of the cutter, are spaced on the outer surface of the roller 24 with such a pitch as to allow the provision of the bodies 15 of preset length.

As an alternative to the rotating cutter, the transverse cutting means 14 can be constituted by a guillotine device.

As a consequence of the action of the rotating cutter or of the guillotine device, a series of bodies 15 of undried fresh pasta having a desired thickness (by way of the action of the gauging rollers), a desired width (by way of the mutually opposite rollers 21, 22 for longitudinal cutting), and a desired length are arranged on the second conveyor belt, which forms the transfer means 19.

The bodies 15 are arranged tidily both transversely and longitudinally with respect to the transfer means 19 that move them.

The transfer means 19 unload, one after the other, tidy strips 25 of bodies 15 onto the underlying transport and deposition means 16.

The transport and deposition means 16, in the embodiment described here by way of non-limiting example, are constituted by a belt conveyor of the retractable type.

Such retractable conveyor, of a per se known type, has a loading part 26, onto which the bodies 15 of undried fresh pasta fall, and an unloading part 27, toward which a belt 28 of the retractable conveyor moves, which is capable of extending and retracting.

In Figure 1, the extended unloading part is shown in broken lines and designated by the reference numeral 27a.

The extension means of the retractable conveyor, of a known type and not shown for the sake of simplicity, can be constituted for example by one or more hydraulic actuators for the translational advancement and retraction of a front roller 29 and of a mutually opposite guiding roller 30, around which the belt 28 slides after winding around an intermediate tensioning roller 31.

As an alternative, and again by way of example, the extension means of the retractable conveyor can be constituted by electrical or electromagnetic devices associated or not with cam-type mechanisms.

The advancement of the front roller 29 entails the retraction of the guiding roller 30, which moves in the opposite direction with respect to the front roller 29; in this manner, the total distance between the front roller 28 and a rear roller 32 increases.

The drying frame 18 is arranged below the unloading part 27 and 27a.

The operation of the apparatus 10 according to the invention is as follows.

The lamination and gauging means 10a generate the sheet 11 of the desired thickness, for example between 0.7 and 1 mm if it is necessary to make tagliolini.

The sheet 11, produced continuously, rests on the conveyor belt 20, which carries it to the cutting rollers 21 and 22; by passing between such rollers, the sheet exits cut into strips 13 which are tidily arranged side-by-side in a parallel configuration.

The strips 13 have a width which is set by the spacing between two contiguous grooves of the rollers 21 and 22; such width, for the production of tagliolini, is preferably between 1 and 1.5 mm.

The transfer means 19, i.e., the second conveyor belt, receive and support the strips 13 that exit from the cutting rollers 21 and 22, and convey them, maintaining their longitudinal continuity and orderly position, toward the transverse cutting means 14.

The blades 23 of the roller 24 are arranged so that the bodies 15 of fresh pasta, which in this example are tagliolini, have a length between 60 and 80 mm.

The bodies 15 of fresh pasta, which hereinafter are referenced by the term "tagliolini", after their separation from the strip 13, remain on the second conveyor belt (the transfer means 19), tidily aligned longitudinally and side-by-side in a parallel arrangement in strips 25, until the second belt deposits them onto the underlying transport and deposition means 16, i.e., onto the loading part 26 of the retractable belt conveyor.

The apparatus 10 is programmed so that the lamination and gauging means, the longitudinal cutting means and the transverse cutting means work continuously, while the transport and deposition means work in the manner explained hereinafter.

While the belt 28 of the retractable conveyor moves continuously, the first strips 25 of tagliolini are deposited thereon, one after the other, in the loading region 26, and generate on the belt 28 additional strips which are more or less stratified and are designated by the reference numerals 17, 17a and so forth.

The number of layers to be superimposed is of course modifiable, for example, simply by programming in a different manner the speed of the belt 28.

The presetting of the speed of the belt 28 and of the processing speeds of the longitudinal cutting means 12, of the transverse cutting means 24 and of the transfer means 19 causes the number of layers of the second strips 17, 17a and so forth to be predefined and constant, so that the quantity of tagliolini 15 loaded onto the belt 28 is known beforehand.

The belt 28 is made to advance continuously, and therefore successive and partially superimposed layers of tagliolini 15, which arrive from the upstream conveyor belt, i.e., the transfer means 19, form at the loading part 26, and such tagliolini are deposited tidily onto the belt 28.

The height of the layer depends on the relative speed of the transfer means 19 and of the belt 28.

The unloading part 27 of the belt 28 extends without accelerations or slowings of the belt 28, and in this manner the tagliolini 15 maintain thereon the position that they had when they were deposited thereon.

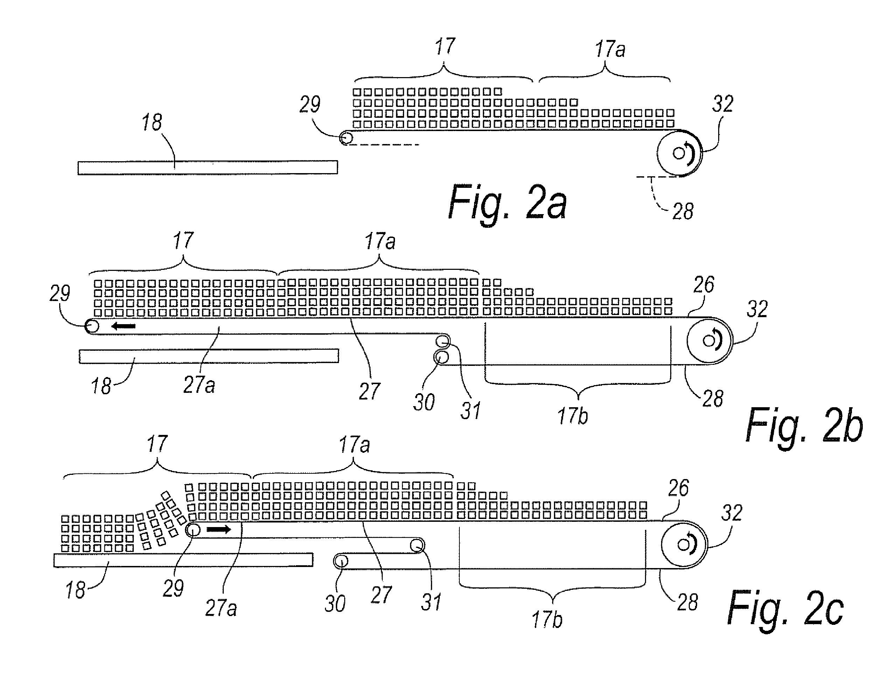

When the unloading part 27 reaches its extended configuration of maximum extension, shown in Figure 2b by the broken lines 27a, and for which the belt 28 is arranged exactly above the drying frame 18, the actuator that moves the front roller 29 produces the rapid retraction of the roller 29, and of the unloading part 27 of the belt 28 with it, to the position of minimum extension of the belt 28.

The tagliolini 15 of the strip 17 that at that moment are on the extended unloading part 27a fall tidily onto the underlying drying frame 18, as shown in Figure 2c.

The underlying drying frame 18 is arranged so as to receive a new strip 17a, and the transport and deposition means 16 repeat the operation for extending the unloading part 27, with subsequent rapid retraction and deposition of the new strip 17a.

The frame 18 is then moved in order to allow the deposition of the subsequent strips 17b, 17c and so forth, so that its surface of the frame is covered in an optimum manner in view of the subsequent operation for drying the tagliolini 15.

With this apparatus 10 it is therefore possible to load the drying frames with constant quantities of tagliolini 15.

The strips 17 and so forth of tagliolini 15 which are placed on the frame 18 in fact have a known number of layers 35, 35a and so forth, and it is also known how many tagliolini 15 compose each layer; the measurements of the individual tagliolini 15 are further known and its average weight can be estimated.

The constancy of the loading of the frames 18 allows to predefine beforehand how many tagliolini on a frame are needed to fill a given package; in this manner, the operation for manual weighing is eliminated.

From the moment when the frames 18 are loaded, the tagliolini are no longer moved from them, and therefore at the end of the drying step it is known how many centimeters of a strip of product have to be gathered in order to obtain the desired weight per package.

For example, if a generic package must contain 250 grams of tagliolini 15, the drying frame 18 measures 1200 x 600 mm, and five parallel strips with a length of 1200 mm are arranged thereon, and the measured weight of the pasta, minus the frame, is 2500 g, then each of the five strips 17 and so forth weighs 500 g, and therefore in order to fill a 250-gram package it is necessary to gather half of a strip 17 and so forth.

In practice it has been found that the invention thus described achieves the intended aim and objects.

In particular, the present invention provides an apparatus for making pasta, particularly of the tagliolini type, which is capable of obviating the cited drawbacks of known types of apparatus, allowing to reduce labor costs and at the same time increase the speed of the production process without losing quality.

The reduction in labor is allowed by the fact that from the lamination means 10a to the drying frame 18, no operator intervention is required and the times of the weighing operations are reduced, since the quantity of pasta to be taken from the frame 18 and to be introduced in the packaging container is already preset, and thus the interventions to adjust such quantity, imposed by the fully manual nature of the weighing and filling operations associated with known types of apparatus, are thus reduced or eliminated.

Further, the present invention provides an apparatus for making pasta which can be managed easily even by an operator who does not have particular prior teachings.

Further, the apparatus according to the invention allows to speed up the process for making tagliolini 15, indeed by way of the elimination of several manual interventions, including the gathering with manual stacking of the intermediate products in strips of sheet of pasta whose width is equal to the length of a single tagliolini (performed with known methods) and the simplification of weighing.

Moreover, the invention provides an apparatus which can be obtained also by assembling known types of machine.

Further, such apparatus allows to adjust the thickness, width and length of the body of fresh pasta to be obtained, and thus can be preset to provide not only tagliolini but also other similar types of fresh pasta, such as tagliatelle, spaghetti, linguini and the like.

Moreover, the present invention provides an apparatus for making pasta, particularly of the tagliolini type, which can be manufactured with known technologies.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2007A000213 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus for making pasta, particularly of the tagliolini type, **characterized in that** it comprises:
- means (10a) for laminating the pasta into a sheet (11) and for calibrating its thickness,
- means (12) for cutting the sheet (11) longitudinally into strips (13) of preset width,
- means (14) for cutting said strips (13) transversely into bodies (15) of preset length,
- means (19) for transferring said strips (13) from said longitudinal cutting means (12) toward said transverse cutting means (14) and from said transverse cutting means (14) toward subsequent transport and deposition means (16),
- means (16) for transporting and depositing said bodies (15) of preset length and width, arranged in tidy strips (17, 17a, 17b) of one or more layers (35, 35a), onto a drying frame (18).

2. The apparatus according to claim 1, **characterized in that** said lamination means (10a) are constituted by a lamination and gauging machine, which comprises a unit for forming sheets of pasta and associated thickness gauging rollers.

3. The apparatus according to the preceding claims, **characterized in that** said lamination means (10a) are adapted to produce said sheet (11) continuously.

4. The apparatus according to one or more of the preceding claims, **characterized in that** it comprises a conveyor belt (20) which is adapted to carry the sheet (11) toward the longitudinal cutting means (12).

5. The apparatus according to one or more of the preceding claims, **characterized in that** said longitudinal cutting means (12) are constituted by two mutually opposite rollers (21, 22) with mutually opposite interpenetrating grooves.

6. The apparatus according to one or more of the preceding claims, **characterized in that** said transfer means (19) are constituted by a second conveyor belt, which is arranged so as to make the strips (13) pass below the transverse cutting means (14).

7. The apparatus according to one or more of the preceding claims, **characterized in that** said transverse cutting means (14) are constituted by a rotating cutter whose blades (23) lie in the direction of the axis of the roller (24) of the cutter and are spaced on the outer surface of said roller (24) with such a pitch as to allow the provision of bodies (15) of preset length.

8. The apparatus according to one or more of claims 1 to 6, **characterized in that** said transverse cutting means (14) can be constituted by a guillotine device.

9. The apparatus according to one or more of the preceding claims, **characterized in that** bodies (15) arranged tidily both transversely and longitudinally with respect to the transfer means (19) that move them exit from said transverse cutting means (14), said transfer means (19) being adapted to unload, one after the other, tidily arranged strips (25) of bodies (15) onto the underlying transport and deposition means (16).

10. The apparatus according to one or more of the preceding claims, **characterized in that** said transport and deposition means (19) are constituted by a belt conveyor of the retractable type.

11. The apparatus according to the preceding claim, **characterized in that** said retractable conveyor has a loading part (26), onto which the strips (25) of bodies (15) of fresh undried pasta fall, and an unloading part (27, 27a), toward which the belt (28) of the retractable conveyor moves and which is designed to extend and retract.

12. The apparatus according to one or more of the preceding claims, **characterized in that** said means for the extension of the retractable conveyor are constituted by one or more hydraulic actuators for the translational advancement and retraction motion of the front roller (29) and of an opposite guiding roller (30), around which the belt (28) runs after winding around an intermediate tensioning roller (31).

13. The apparatus according to one or more of the preceding claims, **characterized in that** said means for extending the retractable conveyor are constituted by electrical or electromagnetic or mechanical devices, optionally associated with cam-type mechanisms.

14. The apparatus according to one or more of the preceding claims, **characterized** and that said lamination and gauging means (10a) are adapted to generate a sheet (11) whose thickness is comprised between 0.7 and 1 mm, said longitudinal cutting means (12) being adapted to provide strips (13) with a width comprised between 1 and 1.5 mm, said transverse cutting means (14) being designed to provide bodies of pasta (15) with a length between 60 and 80 mm.

15. The apparatus according to the preceding claim, **characterized in that** said bodies (15) of fresh pasta are of the tagliolini type.

16. The apparatus according to one or more of the preceding claims, **characterized in that** said lamination and gauging means, the longitudinal cutting means and the transverse cutting means work continuously, while the transport and deposition means work intermittently according to programmable work cycles.

17. The apparatus according to one or more of the preceding claims, **characterized in that** said belt (28) of the retractable conveyor moves continuously and **in that** a series of strips (25) of bodies (15) are deposited tidily, side-by-side or at least partially superimposed on each other, on the loading part (26), the number of layers being predefined and constant, said belt (28) being adapted to perform a translational motion toward the unloading part (27), which is extended to a configuration of maximum extension (27a) and is immediately retracted with such a speed as to allow the tidy deposition of the first strip (17) onto the underlying drying frame (18).
